# FASCICULE DE BREVET EUROPEEN

(11) **EP 3 279 046 B1**
(45) Date de publication et mention de la délivrance du brevet: **20.11.2019**
(21) Numéro de dépôt: 17184311.3
(22) Date de dépôt: 01.08.2017
(51) Int. Cl.: B60T 11/21, B62D 11/08

(54) **CIRCUIT DE FREINAGE, VÉHICULE COMPRENANT UN TEL CIRCUIT DE FREINAGE ET PROCÉDÉ DE COMMANDE DU FREINAGE D'UN VÉHICULE**
BREMSKREIS, FAHRZEUG MIT EINEM DERARTIGEN BREMSKREIS UND BREMSSTEUERVERFAHREN EINES FAHRZEUGS.
BRAKE CIRCUIT, VEHICLE WITH SUCH A BRAKE CIRCUIT AND BRAKE CONTROL METHOD OF A VEHICLE

(30) Priorité: 01.08.2016 FR 1657457
(43) Date de publication de la demande: 07.02.2018
(73) Titulaire: Poclain Hydraulics Industrie, 60410 Verberie (FR)
(72) Inventeur: ZUST, Marko, 60410 Verberie (FR)
(74) Mandataire: Regimbeau

(56) Documents cités:
- EP-A1- 3 023 310
- EP-A2- 2 248 417
- GB-A- 2 462 839
- US-A1- 2009 250 997

## Description

### DOMAINE DE L'INVENTION

La présente invention concerne le domaine technique des valves de contrôle de fluide utilisées pour le contrôle du débit d'un fluide hydraulique dans des systèmes hydrauliques.

Plus particulièrement, la présente invention concerne une valve de contrôle de fluide hydraulique pour un circuit de freinage d'un véhicule.

### ARRIERE-PLAN TECHNOLOGIQUE DE L'INVENTION

De nombreux véhicules comprennent un système de valve adapté pour piloter sélectivement, soit le freinage simultané des roues (par exemple quatre roues) appartenant à un essieu avant et à un essieu arrière lorsque des pédales associées sont activées où le freinage individuel de la roue gauche ou de la roue droite d'un essieu unique, par exemple l'essieu arrière, lorsque des pédales déconnectées sont activées.

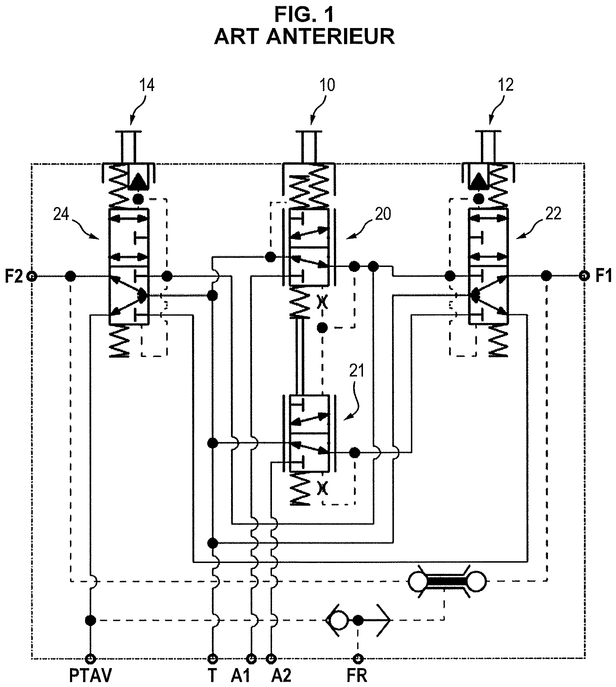

La figure 1 annexée illustre un mode de réalisation d'un tel système de valve connu de l'état de la technique. Ce système est connu sous la terminologie « dual pedal power braking steering valve » (valve de freinage à fonction d'assistance de direction à double pédales).

Sur la figure 1, les sorties respectives correspondent à ce qui suit :
- A1 correspond à une ligne adaptée pour être reliée à une première source de fluide sous pression, telle qu'une pompe ou un réservoir de fluide sous pression, pour freiner simultanément ou sélectivement les roues gauche et droite d'un essieu arrière,
- A2 correspond à une ligne adaptée pour être reliée à une seconde source de fluide sous pression, telle qu'une pompe ou un réservoir de fluide sous pression, pour le freinage des roues d'un essieu avant,
- T correspond à une ligne adaptée pour être reliée à un réservoir ou drain sans pression,
- F1 correspond à une ligne adaptée pour être reliée à un système de freinage de la roue droite d'un essieu arrière de véhicule,
- F2 correspond à une ligne adaptée pour être reliée à un système de freinage d'une roue gauche d'un essieu arrière de véhicule,
- PTAV correspond à une ligne adaptée pour être reliée au système de freinage des roues d'un essieu avant de véhicule et
- FR correspond à une ligne adaptée pour être reliée au système de freinage d'une remorque.

Le circuit hydraulique illustré sur la figure 1 comprend trois pédales : une pédale de freinage principale 10, une pédale de freinage droite 12 et une pédale de freinage gauche 14, ainsi que quatre valves de contrôle : une valve arrière principale 20, une valve avant principale 21, une valve arrière droite auxiliaire 22 et une valve arrière gauche auxiliaire 24.

Lorsqu'aucune des trois pédales 10, 12 et 14 n'est activée, toutes les lignes F1, F2 et PTAV sont reliées au réservoir connecté à la ligne T. Aucun effet de freinage n'est opéré.

Lorsque seulement la pédale droite 12 est activée avec la pédale principale 10, la valve arrière principale 20 et la valve arrière droite auxiliaire 22 sont commutées. La ligne F1 est reliée à la ligne d'alimentation A1. Une pression de freinage est appliquée sur le système de freinage de la roue arrière droite.

Symétriquement, lorsque seulement la pédale gauche 14 est activée avec la pédale principale 10, la valve arrière principale 20 et la valve arrière gauche auxiliaire 24 sont commutées. La ligne F2 est reliée à la ligne d'alimentation A1. Une pression de freinage est appliquée sur le système de freinage de la roue arrière gauche.

Lorsqu'à la fois la pédale droite 12 et la pédale gauche 14 sont activées avec la pédale principale 10, toutes les valves 20, 21, 22 et 24 sont commutées. Les lignes F1 et F2 sont reliées à la ligne d'alimentation A1 et la ligne PTAV est reliée à la ligne d'alimentation A2. Une pression de freinage est appliquée au système de freinage de la roue arrière droite et de la roue arrière gauche à partir de la ligne d'alimentation A1 et simultanément une pression de freinage est appliquée au système de freinage de l'essieu avant à partir de la ligne d'alimentation A2.

Bien qu'une telle valve de freinage à fonction d'assistance de direction à double pédales ait été fabriquée et utilisée à une échelle importante dans le passé, de telles valves présentent des inconvénients.

En particulier, dans certaines applications, telles que pour les machines agricoles et forestières, il est nécessaire d'autoriser un freinage similaire sur les deux côtés du véhicule lorsque le véhicule se déplace à une vitesse dépassant un seuil spécifique, par exemple 40km/h. En d'autres termes, il apparaît nécessaire de désactiver la fonction d'assistance de direction lorsque la vitesse du véhicule est élevée.

Le document US 2009/250997 décrit un autre circuit de freinage destiné à contrôler respectivement le freinage d'un essieu avant et le freinage d'un essieu arrière.

Selon ce document lorsqu'une valve référencée 516 sur sa figure 4 est activée, un appui sur une pédale entraîne l'actionnement des freins de l'essieu avant, tandis qu'un appui sur l'autre pédale entraîne l'actionnement des freins arrière gauche et droit. Le document US 2009/250997 prévoit par ailleurs des moyens destinés à gérer la détection de défauts dans le circuit.

### RESUME DE L'INVENTION

Un objectif principal de la présente invention est de surmonter les inconvénients précités associés aux valves de freinage à fonction d'assistance de direction à double pédales.

A cette fin, la présente invention propose un circuit de freinage tel que défini en revendication 1 annexée.

Ainsi, la présente invention fournit un circuit comprenant une valve de freinage à fonction d'assistance de direction hydraulique comprenant une fonction pour désactiver automatiquement une fonction d'assistance de direction au-dessus d'une vitesse définie du véhicule.

Le circuit conforme à l'invention se distingue de l'enseignement du document US 2009/250997 notamment par le fait que lorsque la valve maître est dans la seconde position, si le conducteur appuie sur l'une des pédales directionnelles, quel que soit le côté gauche ou droit, sollicité, le véhicule est freiné obligatoirement des deux côtés gauche et droit.

Selon d'autres caractéristiques avantageuses de la présente invention :
. dans une première position la valve maître relie une ligne interne conduisant à la valve droite auxiliaire et la valve gauche auxiliaire, au réservoir, tandis que dans la seconde position la valve maître relie la ligne interne à une ligne sous pression de sorte qu'une pression de freinage est appliquée automatiquement à la fois à une ligne de freinage droit d'alimentation et à une ligne de freinage gauche d'alimentation lorsqu'une valve principale est activée,
. la valve maître peut être contrôlée électriquement ou être contrôlée hydrauliquement,
. la valve maître peut être sollicitée au repos lorsque la vitesse du véhicule est sous le seuil de vitesse et sollicitée en position active lorsque la vitesse du véhicule est égale ou supérieure au seuil de vitesse, ou inversement la valve maître peut être sollicitée dans une position active lorsque la vitesse du véhicule est sous le seuil de vitesse et sollicitée au repos lorsque la vitesse du véhicule est égale ou supérieure au seuil de vitesse,
.le circuit comprend une source de pression unique pour contrôler sélectivement le freinage droit ou gauche ou à la fois le freinage droit et gauche,
. le circuit comprend deux sources de pression : une première source de pression pour contrôler sélectivement le freinage droit ou gauche ou le freinage droit et gauche d'un premier essieu, tel qu'un essieu arrière, et une seconde source de pression pour le freinage d'un second essieu, par exemple un essieu avant,
. le circuit comprend deux sources de pression associées à deux valves de contrôle pour freiner respectivement des essieux avant et arrière, lesdites deux valves de contrôle étant contrôlées en parallèle ou en série,
. un sélecteur 3/3 est prévu dans le circuit comprenant deux sources de pression pour interdire le freinage d'un essieu lorsqu'un freinage sélectif sur le côté droit ou sur le côté gauche est fourni sur l'autre essieu,
. toutes les valves du circuit sont intégrées dans un boîtier commun.

L'invention concerne également les véhicules comprenant un circuit de freinage tel que décrit ci-dessus.

L'invention concerne également un procédé tel que défini en revendication 13 annexée.

### PREMIERE REQUETE AUXILIAIRE

### BREVE DESCRIPTION DES FIGURES

Les buts mentionnés précédemment ainsi que des buts additionnels, les caractéristiques et les avantages de l'invention et les moyens pour les obtenir apparaîtront plus clairement, ainsi que l'invention elle-même à la lecture de la description qui va suivre considérée en liaison avec les dessins joints sur lesquels :
- la figure 1 est une vue générale et schématique d'un système de freinage à fonction d'assistance de direction à double pédales connu de l'art antérieur,
- la figure 2 illustre un circuit conforme à la présente invention comprenant une valve maître dans un circuit associé à une source de pression unique,
- la figure 3 illustre un circuit similaire conforme à l'invention comprenant une valve maître dans un circuit associé à deux sources de pression,
- la figure 4 représente un mode de réalisation alternatif du circuit de la figure 3 comprenant une valve maître dans un circuit associé à deux sources de pression dans lequel deux valves de contrôle sont contrôlées en parallèle tandis que les valves de contrôle sont contrôlées en série selon la figure 3,
- la figure 5 illustre un autre mode de réalisation d'un circuit conforme à la présente invention comprenant un sélecteur 3/3 pour interdire le freinage d'un essieu lorsqu'un freinage sélectif sur le côté droit ou sur le côté gauche est demandé sur l'autre essieu, et
- la figure 6 illustre un mode de réalisation préférentiel d'une valve de freinage hydraulique générant une pression proportionnelle au déplacement d'un actionneur tel qu'une pédale, plus précisément la figure 6a illustre la structure de cette valve, tandis que la figure 6b illustre la réponse d'une telle valve sous forme de la pression en fonction du déplacement de l'actionneur.

### DESCRIPTION DETAILLEE DE L'INVENTION

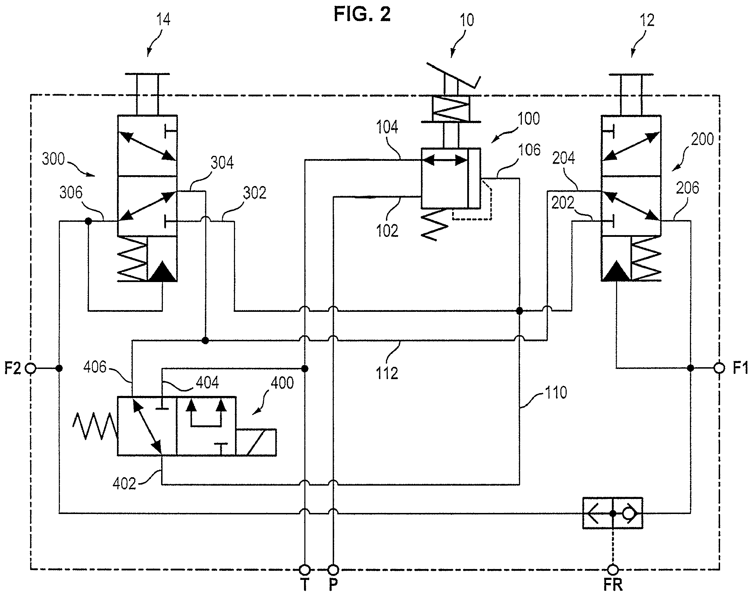

Dans tous les modes de réalisation du circuit conforme à l'invention illustrés sur les figures 2 à 5, la structure et les connexions des valves peuvent être modifiées dès lors que les fonctions des valves restent inchangées.

Le premier mode de réalisation du circuit conforme à la présente invention illustré sur la figure 2 va maintenant être décrit.

Le circuit illustré sur la figure 2 comprend :
- une ligne P adaptée pour être reliée à une source de fluide sous pression, telle qu'une pompe ou un réservoir de fluide sous pression,
- une ligne T adaptée pour être reliée à un réservoir ou drain sans pression,
- une ligne F1 adaptée pour être reliée à un système de freinage d'une roue droite d'un essieu arrière de véhicule,
- une ligne F2 adaptée pour être reliée à un système de freinage d'une roue gauche d'un essieu arrière de véhicule, et
- une ligne FR adaptée pour être reliée au système de freinage d'une remorque.

Le circuit illustré sur la figure 2 comprend également trois pédales : une pédale de freinage principale 10, une pédale de freinage droite 12 et une pédale de freinage gauche 14, ainsi que quatre valves de contrôle : une valve principale 100, une valve droite auxiliaire 200, une valve gauche auxiliaire 300 et une valve maître 400.

La valve principale 100 comprend trois ports : deux entrées 102, 104 et une sortie 106 et deux positions.

L'entrée 102 est reliée à la ligne d'alimentation P.

L'entrée 104 est reliée à la ligne de réservoir T.

La sortie 106 est reliée à une ligne 110.

Au repos, l'entrée 104 est reliée à la sortie 106. L'entrée 102 est fermée.

Lorsque la valve principale 100 est activée par la pédale de freinage principale 10, la sortie 106 reçoit un fluide de la ligne P avec une pression proportionnelle à l'action sur la valve principale 100 à partir de la pédale de freinage principale 10 (ou à partir de l'une de la pédale de freinage droit 12 ou de la pédale de freinage gauche 14, lorsque le système comprend seulement deux pédales, comme cela sera décrit par la suite).

Chacune de la valve droite auxiliaire 200 et de la valve gauche auxiliaire 300 comprend trois ports (deux entrées 202, 204, 302, 304 et une sortie 206, 306) et deux positions.

Les entrées 202 et 302 sont reliées à la ligne 110.

Les entrées 204 et 304 sont reliées à une ligne 112.

Les sorties 206 et 306 sont reliées respectivement aux lignes de freinage F1 et F2.

Au repos, les sorties 206 et 306 sont reliées respectivement aux entrées 204 et 304. Les entrées 202 et 302 sont fermées.

Lorsque la valve droite auxiliaire 200 est activée par la pédale 12 de freinage droit, la valve 200 est commutée dans une deuxième position et la sortie 206 est reliée à l'entrée 202. L'entrée 204 est fermée.

De manière similaire, lorsque la valve gauche auxiliaire 300 est activée par la pédale 14 de freinage gauche, la valve 300 est commutée dans une deuxième position et la sortie 306 est reliée à l'entrée 302. L'entrée 304 est fermée.

La valve maître 400 a trois ports (une entrée 402 et deux sorties 404, 406) et deux positions.

L'entrée 402 est reliée à une ligne 110.

La sortie 404 est reliée à la ligne de réservoir T.

La sortie 406 est reliée à la ligne 112.

Lorsque la vitesse du véhicule est inférieure à un seuil de vitesse, tel que par exemple 40km/h, la sortie 406 et par conséquent la ligne 112 sont connectées à la sortie 404 (reliée à la ligne de réservoir T). Chacune des deux lignes F1 et F2 peut recevoir séparément une pression de freinage à partir de la ligne 110 lorsque la valve auxiliaire correspondante 200 ou 300 est activée. L'entrée 402 est fermée.

Lorsque la vitesse du véhicule est égale ou supérieure au seuil de vitesse, l'entrée 402 est reliée à la sortie 406 et par conséquent la ligne 110 est reliée à l'ensemble des entrées 202, 204, 302 et 304 de sorte qu'une pression de freinage est appliquée automatiquement aux deux lignes de freinage F1 et F2 lorsque la valve principale 100 est activée. La sortie 404 est fermée.

La ligne de freinage de remorque FR est reliée au point milieu d'une valve navette insérée entre les deux lignes de freinage F1 et F2, afin de sélectionner la plus élevée des deux pressions.

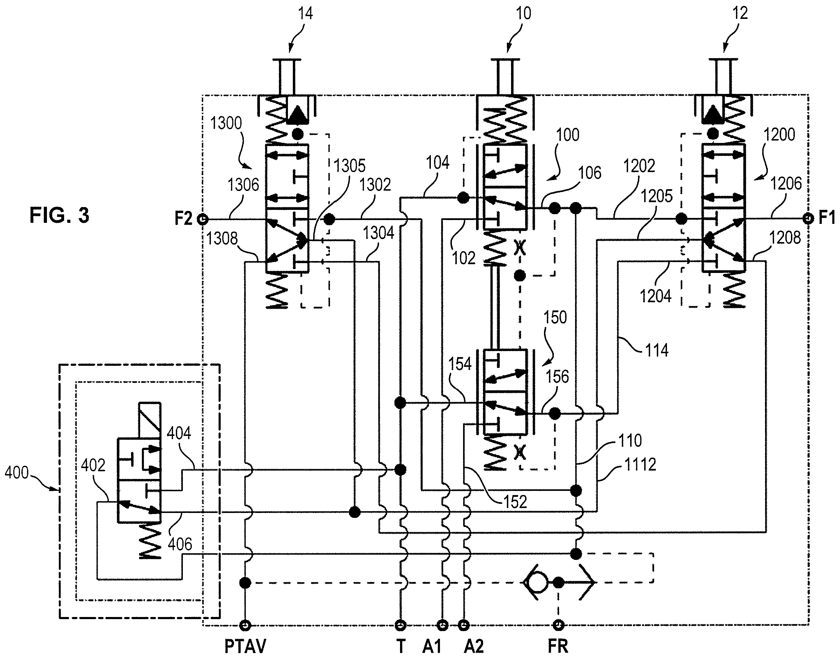

Le second mode de réalisation du circuit conforme à la présente invention est illustrée sur la figure 3 va maintenant être décrit.

La principale différence entre le premier mode de réalisation illustré sur la figure 2 et le second mode de réalisation illustré sur la figure 3 est que le premier mode de réalisation de la figure 2 comprend une valve de freinage à assistance de direction simple circuit, alors que le mode de réalisation de la figure 3 comprend une valve de freinage à assistance de direction double circuit.

Le circuit illustré sur la figure 3 comprend :
- une première ligne A1 adaptée pour être reliée à une première source de fluide sous pression, telle qu'une pompe ou un réservoir de fluide sous pression, pour freiner simultanément ou sélectivement les roues droite ou gauche d'un essieu arrière,
- une deuxième ligne A2 adaptée pour être reliée à une seconde source de pression, telle qu'une pompe ou un réservoir de fluide sous pression, pour freiner les roues d'un essieu avant,
- une ligne T adaptée pour être reliée à un réservoir ou un drain sans pression,
- une ligne F1 adaptée pour être reliée au système de freinage d'une roue droite d'un essieu arrière de véhicule,
- une ligne F2 adaptée pour être reliée au système de freinage d'une roue gauche d'un essieu arrière de véhicule,
- une ligne PTAV adaptée pour être reliée au système de freinage des roues d'un essieu avant de véhicule, et
- une ligne FR adaptée pour être reliée au système de freinage d'une remorque.

Le circuit illustré sur la figure 3 comprend également trois pédales : une pédale de freinage principale 10, une pédale de freinage droit 12 et une pédale de freinage gauche 14, ainsi que cinq valves de contrôle : une valve arrière principale 100, une valve avant principale 150, une valve droite auxiliaire 1200, une valve gauche auxiliaire 1300 et une valve maître 400.

La valve arrière principale 100 a trois ports (deux entrées 102, 104 et une sortie 106) et deux positions, de manière similaire à la valve 100 illustrée sur la figure 2.

L'entrée 102 est reliée à la ligne d'alimentation A1.

L'entrée 104 est reliée à la ligne de réservoir T.

La sortie 106 est reliée à une ligne 110.

Au repos, l'entrée 104 est reliée à la sortie 106. L'entrée 102 est fermée.

Lorsque la valve arrière principale 100 est activée par la pédale 10 de freinage principale, la sortie 106 reçoit un fluide à partir de la ligne A1 avec une pression proportionnelle à l'action sur la valve principale 100 provenant de la pédale 10 de freinage principale (ou à partir de l'une de la pédale de freinage droit 12 ou de la pédale de freinage gauche 14, lorsque le système comprend seulement deux pédales comme cela sera décrit par la suite).

La valve avant principale 150 a trois ports (deux entrées 152, 154 et une sortie 156) et deux positions.

L'entrée 152 est reliée à la ligne d'alimentation A2.

L'entrée 154 est reliée à la ligne de réservoir T.

La sortie 156 est reliée à une ligne 114.

Au repos, l'entrée 154 est reliée à la sortie 156. L'entrée 152 est fermée.

Lorsque la valve avant principale 150 est activée par la pédale 10 de freinage principale, la sortie 156 reçoit un fluide à partir de la ligne A2 avec une pression proportionnelle à l'action sur la valve principale 150 à partir de la pédale 10 de freinage principale (ou à partir de l'une de la pédale de freinage droit 12 ou de la pédale de freinage gauche 14, lorsque le système comprend seulement deux pédales comme cela décrit par la suite).

Chacune de la valve droite auxiliaire 1200 et de la valve gauche auxiliaire 1300 possède cinq ports (trois entrées 1202, 1204, 1205 ; 1302, 1304, 1305 et deux sorties 1206, 1208 ; 1306, 1308) et deux positions.

Les entrées 1202 et 1302 sont reliées à la ligne 110.

L'entrée 1204 est reliée à la sortie 156 de la valve avant principale 150.

L'entrée 1304 est reliée à la sortie 1208 de la valve droite auxiliaire 1200.

Les entrées 1205 et 1305 sont reliées à une ligne 1112.

Les sorties 1206 et 1306 sont reliées respectivement aux lignes de freinage F1 et F2.

La sortie 1208 est reliée à l'entrée 1304 comme décrit précédemment.

La sortie 1308 est reliée à la ligne PTAV pour freiner les roues de l'essieu avant de véhicule.

Au repos, les sorties 1206 et 1306 (ainsi que les sorties 1208 et 1308 sont reliées respectivement aux entrées 1205 et 1305 connectées à la ligne 1112). Les entrées 1202, 1204, 1302, 1304 sont fermées.

Lorsque la valve droite auxiliaire 1200 est activée par la pédale 12 de freinage droit, la valve 1200 est commutée dans une deuxième position et la sortie 1206 est reliée à l'entrée 1202, tandis que la sortie 1208 est reliée à l'entrée 1204. L'entrée 1205 est fermée.

De manière similaire, lorsque la valve gauche auxiliaire 1300 est activée par la pédale 14 de freinage gauche, la valve 1300 est commutée dans une deuxième position et la sortie 1306 est reliée à l'entrée 1302, tandis que la sortie 1308 est reliée à l'entrée 1304. L'entrée 1305 est fermée.

La valve maître 400 est, de manière similaire à la figure 3, une valve à trois ports (une entrée 402 et deux sorties 404, 406) et deux positions.

L'entrée 402 est reliée à la ligne 110.

La sortie 404 est reliée à la ligne de réservoir T.

La sortie 406 est reliée à la ligne 1112.

Lorsque la vitesse du véhicule est inférieure à un seuil de vitesse, par exemple de 40km/h, la sortie 406, et par conséquent la ligne 1112, est reliée à la sortie 404 (reliée à la ligne de réservoir T). Chacune des lignes F1 et F2 peut recevoir séparément une pression de freinage à partir de la ligne 110 lorsque la valve auxiliaire correspondante 1200 ou 1300 est activée. La sortie 402 est fermée.

Lorsque la vitesse du véhicule est égale ou supérieure au seuil de vitesse, l'entrée 402 est reliée à la sortie 406 et par conséquent la ligne 110 est reliée à l'ensemble des entrées 1202, 1205, 1302 et 1305 de sorte qu'une pression de freinage est appliquée automatiquement à la fois aux lignes de freinage F1 et F2 lorsque la valve principale 100 est activée. La sortie 404 est fermée.

La ligne de freinage de remorque FR est reliée au port milieu d'une valve navette insérée entre les deux lignes de freinage F1 et F2.

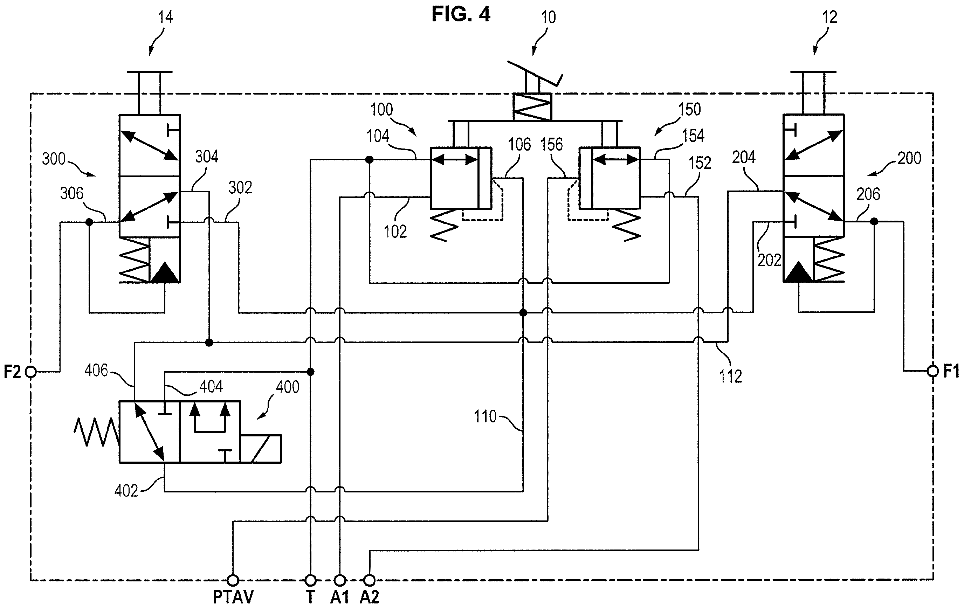

Le troisième mode de réalisation du circuit conforme à l'invention illustré sur la figure 4 va maintenant être décrit.

La différence principale entre le troisième mode de réalisation de la figure 4 et le second mode de réalisation de la figure 3 est que selon le troisième mode de réalisation de la figure 4, une valve arrière principale 100 et une valve avant principale 150 sont actionnées en parallèle comme illustré schématiquement sur la figure 4, alors que dans le second mode de réalisation de la figure 3, la valve arrière principale 100 et la valve avant principale 150 sont actionnées en série.

Le circuit illustré sur la figure 4 comprend, de manière similaire à la figure 3 :
- une première ligne A1 adaptée pour être reliée à une première source de fluide sous pression, telle qu'une pompe ou un réservoir de fluide sous pression, pour freiner simultanément ou sélectivement les roues gauche et droite d'un essieu arrière,
- une seconde ligne A2 adaptée pour être reliée à une seconde source de fluide sous pression, telle qu'une pompe ou un réservoir de fluide sous pression, pour freiner les roues d'une essieu avant,
- une ligne T adaptée pour être reliée à un réservoir ou drain sans pression,
- une ligne F1 adaptée pour être reliée au système de freinage de la roue droite d'un essieu arrière de véhicule,
- une ligne F2 adaptée pour être reliée au système de freinage de la roue gauche de l'essieu arrière de véhicule, et
- une ligne PTAV adaptée pour être reliée au système de freinage des roues de l'essieu avant du véhicule.

Le circuit illustré sur la figure 4 comprend également trois pédales. Une pédale de freinage principale 10, une pédale de freinage droit 12 et une pédale de freinage gauche 14, ainsi que cinq valves de contrôle : une valve arrière principale 100, une valve avant principale 150, une valve droite auxiliaire 200, une valve gauche auxiliaire 300 et une valve maître 400.

La valve arrière principale 100 comporte trois ports (deux entrées 102, 104 et une sortie 106) et deux positions de manière similaire à la valve 100 illustrée sur la figure 2.

L'entrée 102 est reliée à la ligne d'alimentation A1.

L'entrée 104 est reliée à la ligne de réservoir T.

La sortie 106 est reliée à une ligne 110.

Au repos, l'entrée 104 est reliée à la sortie 106. L'entrée 102 est fermée.

Lorsque la valve arrière principale 100 est activée par la pédale 10 de freinage principale, la sortie 106 reçoit un fluide à partir de la ligne A1 avec une pression proportionnelle à l'action sur la valve principale 100 provenant de la pédale 10 de freinage principale (ou à partir de l'une de la pédale de freinage droit 12 ou de la pédale de freinage gauche 14 lorsque le système comprend seulement deux pédales, comme cela sera décrit par la suite).

La valve avant principale 150 possède trois ports (deux entrées 152, 154 et une sortie 156) et deux positions.

L'entrée 152 est reliée à la ligne d'alimentation A2.

L'entrée 154 est reliée à la ligne de réservoir T.

La sortie 156 est reliée à la ligne PTAV pour le système de freinage des roues de l'essieu avant du véhicule.

Au repos, l'entrée 154 est reliée à la sortie 156. L'entrée 152 est fermée.

Lorsque la valve avant principale 150 est activée par la pédale 10 de freinage principale, la sortie 156 reçoit un fluide à partir de la ligne A2 avec une pression proportionnelle à l'action sur la valve principale 150 provenant de la pédale 10 de freinage principale (ou à partir de la pédale 12 de freinage droit ou de la pédale 14 de freinage gauche, lorsque le système comprend seulement deux pédales comme cela sera décrit par la suite).

Chacune de la valve droite auxiliaire 200 et de la valve gauche auxiliaire 300 possède trois ports (deux entrées 202, 204, 302, 304 et une sortie 206, 306) et deux positions.

Les entrées 202 et 302 sont reliées à la ligne 110.

Les entrées 204 et 304 sont reliées à la ligne 112.

Les sorties 206 et 306 sont reliées respectivement aux lignes de freinage F1 et F2.

Au repos, les sorties 206 et 306 sont reliées respectivement aux entrées 204 et 304. Les entrées 202 et 302 sont fermées.

Lorsque la valve droite auxiliaire 200 est activée par la pédale 12 de freinage droit, la valve 200 est commutée dans une deuxième position et la sortie 206 est reliée à l'entrée 202. L'entrée 204 est fermée.

De manière similaire, lorsque la valve gauche auxiliaire 300 est actionnée par la pédale 14 de freinage gauche, la valve 300 est commutée dans une deuxième position et la sortie 306 est reliée à l'entrée 302. L'entrée 304 est fermée.

La valve principale 400 est, de manière similaire à la figure 2 et à la figure 3, une valve à trois ports (une entrée 402 et deux sorties 404, 406) et deux positions.

L'entrée 402 est reliée à la ligne 110.

La sortie 404 est reliée à la ligne de réservoir T.

La sortie 406 est reliée à la ligne 112.

Lorsque la vitesse du véhicule est sous un seuil de vitesse, par exemple sous 40km/h, la sortie 406, et par conséquent la ligne 112, est reliée à la sortie 404 (reliée à la ligne de réservoir T). Chacune des lignes F1 et F2 peut recevoir séparément une pression de freinage à partir de la ligne 110 lorsque la valve auxiliaire correspondante 200 ou 300 est activée. L'entrée 402 est fermée.

Lorsque la vitesse du véhicule est égale ou supérieur au seuil de vitesse, l'entrée 402 est reliée à la sortie 406 et par conséquent la ligne 110 est reliée à l'ensemble des entrées 202, 204, 302 et 304 de sorte qu'une pression de freinage est appliquée automatiquement à la fois aux lignes de freinage F1 et F2 lorsque la valve principale 100 est activée. La sortie 404 est fermée.

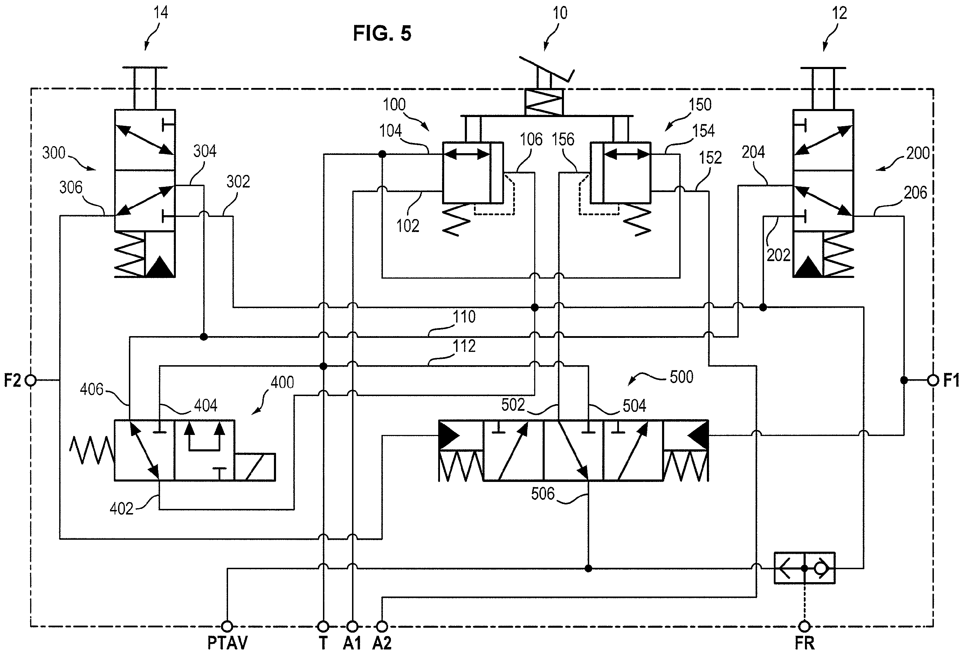

Le quatrième mode de réalisation du circuit conforme à l'invention représenté sur la figure 5 va maintenant être décrit.

La principale différence entre le troisième mode de réalisation représenté sur la figure 4 et la quatrième mode de réalisation représenté sur la figure 5 est que dans le quatrième mode de réalisation de la figure 5, un sélecteur 3/3 500 est fourni dans le circuit pour interdire le freinage de l'essieu avant lorsqu'un freinage sélectif du côté droit ou du côté gauche est opéré sur l'essieu arrière.

Le circuit illustré sur la figure 5 comprend de manière similaire à la figure 4 :
- une première ligne A1 adaptée pour être reliée à une première source de fluide sous pression, telle qu'une pompe ou un réservoir de fluide sous pression, pour le freinage simultané ou sélectif des roues gauche et droite de l'essieu arrière,
- une seconde ligne A2 adaptée pour être reliée à une seconde source de fluide sous pression, telle qu'une pompe ou un réservoir de fluide sous pression, pour le freinage des roues d'un essieu avant,
- une ligne T adaptée pour être reliée à un réservoir ou un drain sans pression,
- une ligne F1 adaptée pour être reliée au système de freinage de la roue droite d'un essieu arrière de véhicule,
- une ligne F2 adaptée pour être reliée au système de freinage de la roue gauche de l'essieu arrière du véhicule,
- une ligne PTAV adaptée pour être reliée au système de freinage des roues de l'essieu avant du véhicule, et
- une ligne FR adaptée pour être reliée au système de freinage d'une remorque, ainsi que :
- trois pédales : une pédale 10 de freinage principale, une pédale 12 de freinage droit et une pédale 14 de freinage gauche, et
- cinq valves de contrôle : une valve arrière principale 100, une valve avant principale 150, une valve droite auxiliaire 200, une valve gauche auxiliaire 300 et une valve maître 400.

Avec la seule exception que la sortie 156 de la valve avant principale 150 n'est pas reliée directement à la ligne avant de freinage PTAV et la sortie 404 de la valve maître 400 n'est pas reliée à la ligne de réservoir T, la liaison des cinq valves de contrôle 100, 150, 200, 300 et 400 de la figure 5 est similaire à la figure 4 et par conséquent ne sera pas décrite dans le détail.

Selon le quatrième mode de réalisation représenté sur la figure 5, un sélecteur 3/3 500 est placé entre la sortie 156 de la valve avant principale 150 et la ligne avant de freinage PTAV.

Le sélecteur 3/3 500 possède trois ports (deux entrées 502, 504 et une sortie 506) et trois positions.

L'entrée 502 est reliée à la sortie 156 de la valve avant principale 150.

L'entrée 504 est reliée au réservoir T et également à la sortie 404 de la valve maître 400.

La sortie 506 est reliée à la ligne freinage PTAV.

Lorsqu'aucune pression de freinage n'est appliquée sur les lignes de freinage F1 et F2 ou lorsqu'une pression de freinage identique est appliquée simultanément sur les lignes de freinage F1 et F2, le sélecteur 3/3 500 est en position médiane et la sortie 506 reliée à la ligne de freinage PTAV est connectée à l'entrée 502 et par conséquent à la sortie 156 de la valve avant principale 150 de sorte qu'un freinage est autorisé sur la ligne avant. L'entrée 504 est fermée.

Cependant, si une pression de freinage est appliquée seulement sur l'une des lignes de freinage F1 et F2, ce qui signifie qu'une fonction d'assistance de direction est sélectionnée, le sélecteur 3/3 500 est commuté en position latérale de sorte que la sortie 506 est connectée à l'entrée 504, reliant la ligne de freinage PTAV au réservoir T. Aucune pression de freinage n'est ainsi appliquée à la ligne de freinage PTAV dans ce cas. L'entrée 502 est fermée.

La ligne de freinage de remorque FR peut être connectée au port milieu d'une valve navette insérée entre la ligne de freinage 110 et la ligne de freinage PTAV comme illustré sur la figure 5.

Selon les modes de réalisation précédents de l'invention, lorsque la vitesse du véhicule est inférieure à une vitesse prédéterminée, la ligne 112 est reliée au réservoir, par l'intermédiaire de la valve maître 400. Dans cette position, la ligne de freinage F1, respectivement F2, est reliée au réservoir lorsque la valve droite auxiliaire 200, respectivement la valve gauche auxiliaire 300, est au repos.

Lorsque la vitesse du véhicule est au-dessus d'une vitesse prédéterminée, la ligne 112 est reliée à la ligne de freinage de sortie 110, par l'intermédiaire de la valve maître 400. Dans cette position, la ligne de freinage F1, respectivement F2, est reliée à la ligne de freinage de sortie 110 quelle que soit la position de la valve droite auxiliaire 200, respectivement valve gauche auxiliaire 300. La pression de freinage venant de la valve principale 100 est appliquée des deux côtés.

Selon une autre caractéristique de l'invention, la valve arrière principale 100 et la valve avant principale 150 sont des valves adaptées pour prélever du fluide à partir d'une source sous pression et fournir sur leur sortie une pression de fluide qui est proportionnelle au déplacement d'un actuateur de commande, tel qu'une pédale.

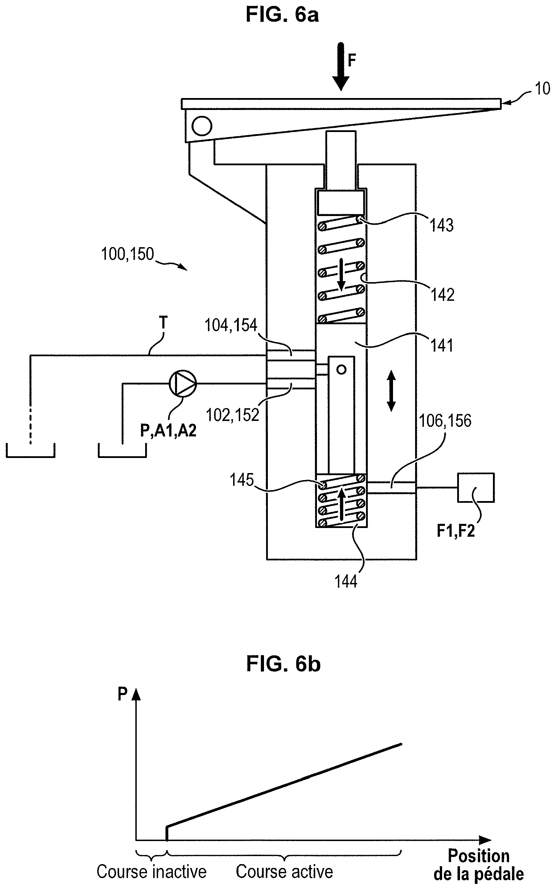

Un mode de réalisation préférentiel d'une telle valve proportionnelle est illustré, uniquement à titre d'exemple, sur les figures 6a et 6b annexées.

Comme cela est visible sur la figure 6a, chaque valve 100, 150 comprend un plongeur ou tiroir 141 monté à translation dans un cylindre 142 afin de mettre sélectivement en communication le port de sortie 106, 156, adapté pour être relié à la ligne de freinage d'alimentation F1 ou F2, avec le port d'entrée 102, 152 connecté à une ligne d'alimentation de pression P, A1 ou A2 ou avec le port d'entrée 104, 154 du trajet T à pression atmosphérique, selon le degré d'actionnement de la pédale de frein 10.

A cette fin, la valve 100, 150 comprend un ressort de charge 143 mis en compression par l'actionnement de la pédale de frein 10 (au plus généralement la commande mécanique progressive), tendant à déplacer le plongeur 141 pour mettre en communication le trajet T, A1 ou A2 avec le trajet F1 ou F2.

La valve 100, 150 comprend également une chambre de contre-réaction 144 comprenant un ressort 145, le ressort et la chambre étant positionnés sur le côté opposé du ressort de charge 143 par rapport au plongeur, pour exercer une pression opposée à celle du ressort de charge.

Ainsi, en absence de la pédale 10, le ressort 145 exerce une pression sur le plongeur qui met en communication le trajet T avec les trajets F1 ou F2 et ainsi vide la chambre de freinage et relâche les freins.

Lors de l'actionnement de la pédale 10, le ressort 143 augmente sa pression sur le plongeur pour mettre en communication le trajet T ou A1 ou A2 avec le trajet F1 ou F2 et ainsi renforce le freinage et met sous pression la chambre de freinage. En parallèle, la pression augmente également dans la chambre de contre-réaction 144 puisque celle-ci est reliée à la chambre de freinage via la ligne F1 ou F2. La pression dans la chambre de contre-réaction 144 est égale à la pression dans la chambre de freinage excluant une perte de pression.

La pression dans la chambre de contre-réaction 144 exerce une pression sur le plongeur 141 opposé à la pression du ressort de charge 143 résultant de l'actionnement du frein et tendant à réduire le flux s'écoulant du trajet T ou A1 ou A2 vers le trajet F1 ou F2.

Lorsqu'il existe un équilibre entre la pression du ressort de charge 143, d'une part et la pression exercée par la pression du fluide dans la chambre de contre-réaction 144 d'autre part, le plongeur reste en équilibre et maintient la pression dans le trajet F1 ou F2 - et dans la chambre de freinage - à une valeur constante.

L'équilibre dépend des caractéristiques géométriques de la valve (plongeur, cylindre) et du calibrage du ressort de charge 143. Ainsi, la valve 100, 150 délivre une pression dans la chambre de freinage et dans le trajet F1 ou F2 qui est proportionnelle au degré d'actionnement de la pédale 10, le coefficient de proportionnalité dépendant des caractéristiques de la valve et du calibrage du ressort.

La figure 6b illustre la relation qui existe entre la pression obtenue dans la chambre de freinage reliée à la ligne F1 ou F2 et le degré d'actionnement de la pédale 10. L'augmentation proportionnelle de pression en fonction de la course de la pédale débute uniquement lorsque le trajet excède une « course morte » pour laquelle la pression exercée par la pédale sur le ressort de charge 143 n'est pas suffisante pour transmettre une force au plongeur 141.

Lorsque la pression dans la chambre de contre-réaction 144 du frein excède la pression prescrite correspondant au degré d'actionnement de la pédale, la pression additionnelle dans la chambre de contre-réaction 144 pousse le plongeur pour mettre le trajet T à nouveau en communication avec le trajet F1 ou F2 et réduire la pression dans le frein.

La pression dans la ligne F1 ou F2 est ainsi régulée quel que soit le niveau de débit circulant à travers F1 ou F2, tant que la capacité de délivrance de la pompe n'est pas dépassée, c'est-à-dire tant que la pompe peut fournir le débit consommé par le circuit connecté à la ligne F1 ou F2.

Ainsi la pression dans le trajet F1 ou F2 et dans la chambre de freinage associée est contrôlée à tout moment selon le degré d'actionnement de la commande de frein. Cette commande est comprise lorsque la garniture du frein est physiquement en pression ou non en pression contre le disque ou le tambour, lorsqu'il y a une pression sur la pédale ou lorsque celle-ci est relâchée, que le frein soit en déplacement, c'est-à-dire en mouvement dynamique ou statique, c'est-à-dire sans mouvement.

Bien que l'invention ait été représentée et décrite en référence à des modes de réalisation préférés, il doit être compris que l'invention n'est pas limitée à la forme particulière de ces réalisations et que de nombreux amendements ou modifications peuvent être opérés sans sortir du cadre de l'invention.

De plus, la présente invention peut trouver de nombreuses applications, telles que par exemple pour des machines agricoles ou forestières, en particulier des tracteurs agricoles, des moissonneuses batteuses et des chargeuses pelleteuses.

Comme indiqué précédemment, selon l'invention, la valve maître 400 peut être contrôlée électriquement par une unité de contrôle associée à un capteur de vitesse de véhicule ou contrôler hydrauliquement par tout moyen sensible à la vitesse du véhicule ou un paramètre, tel qu'une pression ou un débit de fluide dans un circuit, qui est représentatif de la vitesse du véhicule.

De plus, comme indiqué précédemment, la valve maître 400 peut être sollicitée au repos lorsque la vitesse du véhicule est inférieure à un seuil de vitesse et sollicitée en position active lorsque la vitesse du véhicule est égale ou supérieure au seuil de vitesse, ou inversement la valve maître peut être sollicitée en position active lorsque la vitesse du véhicule est sous le seuil de vitesse ou sollicitée au repos lorsque la vitesse du véhicule est égale ou supérieure au seuil de vitesse.

Dans les modes de réalisation illustrés sur les figures 2 à 5, lorsque la vitesse est égale à ou supérieure au seuil, la valve maître 400 est au repos et le freinage différentiel entre le côté droit et le côté gauche n'est pas possible, tandis qu'un tel freinage différentiel entre le côté droit et le côté gauche est possible, lorsque la vitesse est inférieure au seuil et la valve maître 400 est active. Naturellement, le fonctionnement opposé est également possible.

Dans la description qui précède, les essieux ou roues sont parfois désignés comme « avant » ou « arrière ». Cependant, en pratique cette désignation n'est pas limitative. Dans tous les cas, l'essieu ou les roues pour lesquels un freinage sélectif entre le côté droit et le côté gauche est possible, peuvent être l'avant ou l'arrière ou tout autre essieu dans le cas d'un véhicule comprenant plus de deux essieux.

Dans la description qui précède, les systèmes sont décrits comme comprenant trois pédales : une pédale de freinage principale 10, une pédale de freinage droit 12 et une pédale de freinage gauche 14. Cependant, en variante, les systèmes peuvent comprendre seulement deux pédales : une pédale de freinage droit 12 et une pédale de freinage gauche 14 dans la mesure où chacune des pédales de freinage droit 12 et pédale de freinage gauche 14 est adaptée pour actionner les valves principales 100, 150 (ainsi que les valves 20, 21 selon l'art antérieur) telles que divulguées dans le document EP 2428417.

Dans la description qui précède, les termes « entrée » et « sortie » sont utilisés pour distinguer entre les côtés des valves, cependant ces termes ne doivent pas être considérés comme limitatifs, chaque « entrée » ou « sortie » peut recevoir un fluide entrant ou sortant et par conséquent les termes « entrée » et « sortie » doivent être compris comme « port de fluide ».

## Revendications

1. Circuit de freinage comprenant au moins une valve droite auxiliaire (200) et une valve gauche auxiliaire (300) activées par un conducteur et adaptées pour permettre un freinage des deux côtés, droit et gauche d'un véhicule, lorsque cela est requis, tout en autorisant l'application d'une pression de freinage seulement sur l'un des deux côtés, droit ou gauche, lorsque ceci est demandé pour fournir une fonction de direction assistée, une valve maître (400) ayant deux positions : une première position dans laquelle un freinage droit ou gauche séparé sélectif est autorisé et une deuxième position dans laquelle un freinage sélectif droit ou gauche est interdit, une ligne de freinage droit (204, 1205), une ligne de freinage gauche (304, 1305 et une ligne de freinage de sortie (110), **caractérisé par le fait que** la première position de la valve maître (400) est imposée lorsque le véhicule a une vitesse inférieure à un seuil tandis que la deuxième position de la valve maître (400) est imposée lorsque le véhicule a une vitesse supérieure au seuil et que dans la deuxième position la valve maître (400) relie à la fois la ligne de freinage droit (204, 1205) et la ligne de freinage gauche (304, 1305) à la ligne de freinage de sortie (110) et place à la fois la ligne de freinage droit (204, 1205) et la ligne de freinage gauche (304, 1305) sous pression lorsqu'un freinage est requis sur l'un quelconque des côtés droit ou gauche.

2. Circuit de freinage selon la revendication 1, dans lequel la valve maître (400) est une valve à trois ports (402, 404, 406) et deux positions.

3. Circuit de freinage selon l'une des revendications 1 ou 2, dans lequel dans une première position la valve maître (400) relie une ligne interne (112) conduisant à la valve droite auxiliaire (200) et à la valve gauche auxiliaire (300) à un réservoir, tandis que dans la deuxième position la valve maître (400) relie la ligne interne (112) à une ligne sous pression de sorte qu'une pression de freinage est appliquée automatiquement à la fois à une ligne de freinage droite d'alimentation (F1) et une ligne de freinage gauche d'alimentation (F2) lorsqu'une valve principale (100) est actionnée.

4. Circuit de freinage selon l'une des revendications 1 à 3, dans lequel la valve maître (400) est commandée électriquement.

5. Circuit de freinage selon l'une des revendications 1 à 3, dans lequel la valve maître (400) est commandée hydrauliquement.

6. Circuit de freinage selon l'une des revendications 1 à 5, dans lequel le circuit comprend une source de pression unique pour contrôler sélectivement un freinage droit ou gauche ou à la fois un freinage droit et gauche.

7. Circuit de freinage selon l'une des revendications 1 à 5, dans lequel le circuit comprend deux sources de pression (A1, A2) : une première source de pression (A1) pour contrôler sélectivement un freinage droit ou gauche ou à la fois un freinage droit et gauche d'un premier essieu, tel qu'un essieu arrière, et une seconde source de pression (A2) pour freiner un second essieu, tel qu'un essieu avant.

8. Circuit de freinage selon l'une des revendications 1 à 5, dans lequel un sélecteur (500) est placé dans le circuit comprenant deux sources de pression (A1, A2) pour interdire le freinage sur un essieu lorsqu'un freinage sélectif de côté droit ou du côté gauche est demandé sur l'autre essieu.

9. Circuit de freinage selon la revendication 8, dans lequel le sélecteur (500) est une valve à trois ports et trois positions adaptés de sorte que lorsqu'aucune pression de freinage n'est appliquée aux lignes de freinage (F1, F2) ou lorsqu'une pression de freinage est appliquée sur les deux lignes de freinage (F1, F2), le sélecteur (500) est en position médiane et a une sortie (506) reliée à une ligne de freinage (PTAV) pour permettre le freinage d'un essieu, mais si une pression de freinage est appliquée sur l'une seulement des deux lignes de freinage (F1, F2) ce qui signifie qu'une fonction d'assistance de direction est demandée, le sélecteur (500) est commuté dans une position latérale par laquelle aucune pression de freinage n'est appliquée à la ligne de freinage (PTAV).

10. Circuit de freinage selon l'une des revendications 1 à 9, dans lequel une valve principale (100, 150) est adaptée pour être reliée à une source de pression et à un réservoir (T) pour délivrer à une sortie une pression de freinage de fluide qui est proportionnelle au déplacement d'un actionneur de commande, tel qu'une pédale (10), cette pression de freinage de sortie étant fournie aux valves gauche et droite auxiliaires.

11. Circuit de freinage selon l'une des revendications 1 à 10, dans lequel toutes les valves (100, 200, 300, 400 ; 1200, 1300 ; 150 ; 500) de circuit sont intégrées dans un boîtier commun.

12. Véhicule comprenant un circuit de freinage comprenant une valve maître (400) conforme à l'une des revendications 1 à 11.

13. Procédé de commande du freinage d'un véhicule comportant une fonction d'assistance de direction, comprenant l' étape de commande d'une valve maître (400) possédant deux positions, une première position dans laquelle un freinage droit ou gauche séparé sélectif est autorisé et une une deuxième position dans laquelle un freinage séparé sélectif droit ou gauche est interdit, **caractérisé par le fait qu'**il comprend les étapes de détection d'un paramètre représentatif de la vitesse d'un véhicule et de commande de la valve maître (400) en première position lorsque le véhicule a une vitesse inférieure à un seuil et en deuxième position lorsque le véhicule a une vitesse égale ou supérieure au seuil et de liaison d'une ligne de freinage droit (204, 1205) et d'une ligne de freinage gauche (304, 1305) à une ligne de freinage de sortie (110) pour mettre la ligne de freinage droit (204, 1205) et la ligne de freinage gauche (304, 1305) à la fois sous pression si un freinage est demandé et que la valve maître (400) est en deuxième position.

## Patentansprüche

1. Bremskreis, umfassend mindestens ein rechtes Hilfsventil (200) und ein linkes Hilfsventil (300), die von einem Fahrer aktiviert werden und dafür angepasst sind, ein Bremsen auf beiden Seiten, rechts und links, eines Fahrzeugs zu ermöglichen, wenn dies erforderlich ist, während zugleich das Anlegen eines Bremsdrucks auf nur einer der zwei Seiten, rechts oder links, gestattet wird, wenn dies verlangt wird, um eine Servolenkungsfunktion bereitzustellen, ein Master-Ventil (400), das zwei Stellungen aufweist: eine erste Stellung, in der ein selektives getrenntes Bremsen rechts oder links gestattet ist, und eine zweite Stellung, in der ein selektives Bremsen rechts oder links unterbunden ist, eine rechte Bremsleitung (204, 1205), eine linke Bremsleitung (304, 1305), und eine Ausgangsbremsleitung (110), **dadurch gekennzeichnet, dass** die erste Stellung des Master-Ventil (400) erzwungen wird, wenn das Fahrzeug eine Geschwindigkeit aufweist, die kleiner ist als eine Schwelle, wohingegen die zweite Stellung des Master-Ventil (400) erzwungen wird, wenn das Fahrzeug eine Geschwindigkeit aufweist, die größer ist als die Schwelle, und dass das Master-Ventil (400) in der zweiten Stellung gleichzeitig die rechte Bremsleitung (204, 1205) und die linke Bremsleitung (304, 1305) mit der Ausgangsbremsleitung (110) verbindet und gleichzeitig die rechte Bremsleitung (204, 1205) und die linke Bremsleitung (304, 1305) unter Druck setzt, wenn ein Bremsen auf einer der Seiten, rechts oder links, erforderlich ist.

2. Bremskreis nach Anspruch 1, wobei das Master-Ventil (400) ein Ventil mit drei Wegen (402, 404, 406) und zwei Stellungen ist.

3. Bremskreis nach einem der Ansprüche 1 oder 2, wobei das Master-Ventil (400) in einer ersten Stellung eine Innenleitung (112), die zum rechten Hilfsventil (200) und zum linken Hilfsventil (300) führt, mit einem Behälter verbindet, wohingegen das Master-Ventil (400) in der zweiten Stellung die Innenleitung (112) mit einer unter Druck stehenden Leitung verbindet, sodass ein Bremsdruck automatisch gleichzeitig an eine rechte Zuführbremsleitung (F1) und eine linke Zuführbremsleitung (F2) angelegt wird, wenn ein Hauptventil (100) betätigt wird.

4. Bremskreis nach einem der Ansprüche 1 bis 3, wobei das Master-Ventil (400) elektrisch gesteuert wird.

5. Bremskreis nach einem der Ansprüche 1 bis 3, wobei das Master-Ventil (400) hydraulisch gesteuert wird.

6. Bremskreis nach einem der Ansprüche 1 bis 5, wobei der Kreis eine einzige Druckquelle umfasst, um ein Bremsen selektiv rechts oder links, oder ein Bremsen gleichzeitig rechts und links zu steuern.

7. Bremskreis nach einem der Ansprüche 1 bis 5, wobei der Kreis zwei Druckquellen (A1, A2) umfasst: eine erste Druckquelle (A1), um ein Bremsen selektiv rechts oder links, oder ein Bremsen gleichzeitig rechts und links einer ersten Achse, wie etwa einer Hinterachse, zu steuern, und eine zweite Druckquelle (A2), um eine zweite Achse, wie etwa eine Vorderachse, zu bremsen.

8. Bremskreis nach einem der Ansprüche 1 bis 5, wobei in dem Kreis, der zwei Druckquellen (A1, A2) umfasst, ein Wähler (500) angebracht ist, um das Bremsen an einer Achse zu unterbinden, wenn an der anderen Achse ein selektives Bremsen der rechten Seite oder der linken Seite verlangt wird.

9. Bremskreis nach Anspruch 8, wobei der Wähler (500) ein Ventil mit drei Wegen und drei Stellungen ist, die so angepasst sind, dass wenn kein Bremsdruck an die Bremsleitungen (F1, F2) angelegt wird oder wenn ein Bremsdruck an die zwei Bremsleitungen (F1, F2) angelegt wird, sich der Wähler (500) in Mittelstellung befindet und einen Ausgang (506) mit einer Bremsleitung (PTAV) verbunden aufweist, um das Bremsen einer Achse zu ermöglichen, aber wenn ein Bremsdruck an nur eine der zwei Bremsleitungen (F1, F2) angelegt wird, was bedeutet, dass eine Servolenkungsfunktion verlangt wird, der Wähler (500) in eine seitliche Stellung geschaltet wird, von der kein Bremsdruck an die Bremsleitung (PTAV) angelegt wird.

10. Bremskreis nach einem der Ansprüche 1 bis 9, wobei ein Hauptventil (100, 150) dafür angepasst ist, mit einer Druckquelle und mit einem Behälter (T) verbunden zu werden, um an einem Ausgang einen Fluidbremsdruck zu liefern, der zur Bewegung eines Steueraktuators, wie etwa eines Pedals (10), proportional ist, wobei dieser Ausgangsbremsdruck dem linken und rechten Hilfsventil bereitgestellt wird.

11. Bremskreis nach einem der Ansprüche 1 bis 10, wobei alle die Kreisventile (100, 200, 300, 400; 1200, 1300; 150; 500) in einem gemeinsamen Gehäuse integriert sind.

12. Fahrzeug, das einen Bremskreis umfasst, der ein Master-Ventil (400) nach einem der Ansprüche 1 bis 11 umfasst.

13. Verfahren zum Steuern der Bremsung eines Fahrzeugs, das eine Servolenkungsfunktion umfasst, umfassend den Schritt des Steuerns eines Master-Ventils (400), das zwei Stellungen besitzt, eine erste Stellung, in der ein selektives getrenntes Bremsen rechts oder links gestattet ist, und eine zweite Stellung, in der ein selektives getrenntes Bremsen rechts oder links unterbunden ist, **dadurch gekennzeichnet, dass** es die Schritte umfasst des Erfassens eines Parameters, der für die Geschwindigkeit eines Fahrzeugs repräsentativ ist, und des Steuerns des Master-Ventils (400) in erster Stellung, wenn das Fahrzeug eine Geschwindigkeit aufweist, die kleiner ist als eine Schwelle, und in zweiter Stellung, wenn das Fahrzeug eine Geschwindigkeit aufweist, die gleich oder größer ist als die Schwelle, und des Verbindens einer rechten Bremsleitung (204, 1205) und einer linken Bremsleitung (304, 1305) mit einer Ausgangsbremsleitung (110), um die rechte Bremsleitung (204, 1205) und die linke Bremsleitung (304, 1305) gleichzeitig unter Druck zu setzen, wenn eine Bremsung verlangt wird und sich das Master-Ventil (400) in zweiter Stellung befindet.

## Claims

1. Braking system comprising at least one auxiliary right valve (200) and one auxiliary left valve (300) activated by a driver and suitable for allowing for braking on the two sides, right and left of a vehicle, when this is required, while still authorising the application of a braking pressure on only one of the two sides, right or left, when the latter is requested in order to provide a power steering function, a master valve (400) having two positions: a first position wherein a selective separate right or left braking is authorised and a second position wherein a selective right or left braking is prohibited, a right braking line (204, 1205), a left braking line (304, 1305) and an output braking line (110), **characterised by** the fact that the first position of the master valve (400) is imposed when the vehicle has a speed less than a threshold while the second position of the master valve (400) is imposed when the vehicle has a speed greater than the threshold and that in the second position the master valve (400) connects both the right braking line (204, 1205) and the left braking line (304, 1305) to the output braking line (110) and places both the right braking line (204, 1205) and the left braking line (304, 1305) under pressure when a braking is required on either one of the right or left sides.

2. Braking system according to claim 1, wherein the master valve (400) is a valve with three ports (402, 404, 406) and two positions.

3. Braking system according to one of claims 1 or 2, wherein in a first position the master valve (400) connects an internal line (112) leading to the auxiliary right valve (200) and to the auxiliary left valve (300) to a reservoir, while in the second position the master valve (400) connects the internal line (112) to a pressurised line in such way that a braking pressure is automatically applied to both a right braking supply line (F1) and a left braking supply line (F2) when a main valve (100) is actuated.

4. Braking system according to one of claims 1 to 3, wherein the master valve (400) is controlled electrically.

5. Braking system according to one of claims 1 to 3, wherein the master valve (400) is controlled hydraulically.

6. Braking system according to one of claims 1 to 5, wherein the circuit comprises a single source of pressure in order to selectively control a right or left braking or both a right and left braking.

7. Braking system according to one of claims 1 to 5, wherein the circuit comprises two sources of pressure (A1, A2) : a first source of pressure (A1) for selectively controlling a right or left braking or for selectively controlling a right or left braking of a first axle, such as a rear axle, and a second source of pressure (A2) for braking a second axle, such as a front axle.

8. Braking system according to one of claims 1 to 5, wherein a selector (500) is placed in the circuit comprising two sources of pressure (A1, A2) in order to prohibit the braking on one axle when a selective right side or left side braking is requested on the other axle.

9. Braking system according to claim 8, wherein the selector (500) is a valve with three ports and three positions adapted in such a way that when no braking pressure is applied to the braking lines (F1, F2) or when a braking pressure is applied to the two braking lines (F1, F2), the selector (500) is in the median position and has an output (506) connected to a braking line (total weight empty) to allow for the braking of one axle, but if a braking pressure is applied on only one of the two braking lines (F1, F2) which means that a power steering function is requested, the selector (500) is switched to a lateral position through which no braking pressure is applied to the braking line (total weight empty).

10. Braking system according to one of claims 1 to 9, wherein a main valve (100, 150) is suitable for being connected to a source or pressure and to a reservoir (T) to deliver at an outlet a fluid braking pressure that is proportional to the displacement of a control actuator, such as a pedal (10), with this outlet braking pressure being supplied to the left and right auxiliary valves.

11. Braking system according to one of claims 1 to 10, wherein all the circuit valves (100, 200, 300, 400; 1200, 1300; 150; 500) are integrated into a common housing.

12. Vehicle comprising a braking circuit comprising a master valve (400) in accordance with one of claims 1 to 11.

13. Method for controlling the braking of a vehicle comprising a power steering function, comprising the step of controlling a master valve (400) having two positions, a first position wherein a selective separate right or left braking is authorised and a second position wherein a right or left selective separate braking is prohibited, **characterised by** the fact that it comprises the steps of detecting a parameter representative of the speed of a vehicle and of controlling the master valve (400) in the first position when the vehicle has a speed less than a threshold and in the second position when the vehicle has a speed greater than or equal to the threshold and of connecting a right braking line (204, 1205) and a left braking line (304, 1305) to an output braking line (110) in order to place the right braking line (204, 1205) and the left braking line (304, 1305) both under pressure if a braking is requested and the master valve (400) is in the second position.
